# EUROPEAN PATENT SPECIFICATION

(11) **EP 4 109 422 B1**
(45) Date of publication and mention of the grant of the patent: **18.02.2026**
(21) Application number: 21775984.4
(22) Date of filing: 09.03.2021
(51) Int. Cl.: G06V 20/66, G07D 5/00, G06T 7/00, G06V 10/44

(54) **FEATURE INFORMATION GENERATION DEVICE, COIN IDENTIFICATION DEVICE, FEATURE INFORMATION GENERATION SYSTEM, FEATURE INFORMATION GENERATION METHOD, AND FEATURE INFORMATION GENERATION PROGRAM**
VORRICHTUNG ZUR ERZEUGUNG VON MERKMALSINFORMATIONEN, MÜNZIDENTIFIKATIONSVORRICHTUNG, SYSTEM ZUR ERZEUGUNG VON MERKMALSINFORMATIONEN, VERFAHREN ZUR ERZEUGUNG VON MERKMALSINFORMATIONEN UND PROGRAMM ZUR ERZEUGUNG VON MERKMALSINFORMATIONEN
DISPOSITIF DE GÉNÉRATION D'INFORMATIONS DE CARACTÉRISTIQUE, DISPOSITIF D'IDENTIFICATION DE PIÈCE DE MONNAIE, SYSTÈME DE GÉNÉRATION D'INFORMATIONS DE CARACTÉRISTIQUE, PROCÉDÉ DE GÉNÉRATION D'INFORMATIONS DE CARACTÉRISTIQUE ET PROGRAMME DE GÉNÉRATION D'INFORMATIONS DE CARACTÉRISTIQUE

(30) Priority: 23.03.2020 JP 2020051467
(43) Date of publication of application: 28.12.2022
(73) Proprietor: GLORY LTD., Himeji-shi Hyogo 670-8567 (JP)
(72) Inventor: KOBAYASHI, Saori, Himeji-shi, Hyogo 670-8567 (JP); MORISHITA, Ruka, Himeji-shi, Hyogo 670-8567 (JP)
(74) Representative: Page White Farrer
(86) International application number: PCT/JP2021/009259
(87) International publication number: WO 2021/193013

(56) References cited:
- EP-B1- 0 798 669
- JP-A- 2006 164 192
- JP-A- 2018 169 725

## Description

### TECHNICAL FIELD

The present disclosure relates to feature information generation devices, coin recognition devices, feature information generation systems, feature information generation methods, and feature information generation programs. The present disclosure more specifically relates to a feature information generation device, a feature information generation system, a feature information generation method, and a feature information generation program that generate feature information for coin recognition from an image of a coin; and a coin recognition device that uses the feature information to recognize a coin.

### BACKGROUND ART

Coin recognition devices are known which acquire an image of a coin to compare feature information extracted from the acquired image of the coin with the preregistered feature information and recognize the coin based on the result of the comparison. The preregistered feature information is used as a reference for recognition and is thus also called "template". Examples of the coin recognition include determination of the denomination (type of coin), authenticity, and fitness (damaged or not) of the coin.

There are various techniques to create a template. For example, Patent Literature 1 discloses a method of creating a template which includes dividing many image data with different levels of soiling on an object such as a coin into a plurality of groups by a statistical method and creating a template for each of the groups.

EP0798669B1 discloses a coin discriminating apparatus and, in particular, to a coin discriminating apparatus for discriminating coins by optically detecting patterns of the lower surfaces thereof.

### CITATION LIST

### - Patent Literature

Patent Literature 1: JP 3713156 B

### SUMMARY OF INVENTION

### - Technical Problem

Introducing a new series of coins requires rapid preparation of a template of the introduced coins to introduce the template into the market so that coin recognition devices can recognize the coins immediately after the introduction.

The method of creating a template disclosed in Patent Literature 1 uses a plurality of image data with different levels of soiling, meaning that actually obtained coins are used to create a template. Immediately after introduction of a new series of coins, such a method of creating a template from a physical coin (actual coin) cannot create a template of a soiled coin because there are only unused, new coins. The method therefore can only appropriately recognize soiled coins with a low level of soiling.

Circulated coins include coins made of two or more metals or alloys (bimetal coins). Examples thereof include coins each defined by a central part (core) and an outer periphery part (ring) that are made of different metals or alloys. Such bimetal coins are easily soiled in the bonding portion (boundary line) between the central part and the outer periphery part due to aging. Specifically, a white pattern may emerge on a bimetal coin or the pattern on the coin may disappear. Soiling on the boundary line may therefore possibly influence determination of features other than the fitness, such as determination of the denomination (type of coin) and the authenticity. Thus, especially for bimetal coins, a method has been required which appropriately recognizes a soiled coin even when a soiled coin is physically unavailable as in immediately after the introduction of a new series of coins.

In response to the above current state of the art, an object of the present disclosure is to provide a feature information generation device, a feature information generation system, a feature information generation method, and a feature information generation program that can generate feature information for appropriate recognition of a coin corresponding to a soiled coin even when the soiled coin is physically unavailable; and a coin recognition device that uses the feature information to recognize a coin.

### - Solution to Problem

In order to solve the above issue and to achieve the object, a feature information generation device is provided according to claim 1.

A coin recognition device is provided according to claim 9.

A feature information generation method is provided according to claim 10.

Some preferred features are set forth in the dependent claims.

### - Advantageous Effects of Invention

The feature information generation device, the feature information generation system, the feature information generation method, and the feature information generation program of the present disclosure can generate feature information for appropriate recognition of a coin corresponding to a soiled coin when the actual soiled coin is unavailable. Also, the coin recognition device of the present disclosure can appropriately recognize a coin corresponding to a soiled coin using feature information when the actual soiled coin is unavailable.

### BRIEF DESCRIPTION OF DRAWINGS

FIG. 1 is a schematic plan view of a specific example of a bicolor coin.
FIG. 2 is a functional block diagram showing the structure of a feature information generation device of an embodiment.
FIG. 3 is a flowchart showing an example of the operation of a feature information generation device 100a.
FIG. 4 is a functional block diagram showing the structure of a feature information generation device of another embodiment.
FIG. 5 is a schematic side view of an example of an image sensor unit.
FIG. 6 is a schematic plan view of a transport surface of the image sensor unit in FIG. 5.
FIG. 7 is a view of the internal structure of the image sensor unit in FIG. 5 with the transport path side cover removed.
FIG. 8 is a schematic cross-sectional view of the image sensor unit in FIG. 5.
FIG. 9 is a view used to describe the outline of a processing executed by an image cut-out unit 121.
FIG. 10 is a view showing an example of a cut-out image 121a output by the image cut-out unit 121.
FIG. 11 is a view used to describe the outline of an edge extraction processing (image conversion processing) executed by an edge extraction unit 122.
FIG. 12 is a view used to describe the outline of polar coordinate conversion executed by a polar coordinate conversion unit 123.
FIG. 13 is a view used to describe the details of a processing executed by a synthetic image creation unit 124.
FIG. 14 is a flowchart showing an example of the operation of a feature information generation device 100.
FIG. 15 is a functional block diagram showing the structure of a cloud server-type coin recognition device of an embodiment.
FIG. 16 is a functional block diagram showing the structure of a feature information generation system of an embodiment.

### DESCRIPTION OF EMBODIMENTS

Hereinbelow, embodiments of the feature information generation device, the coin recognition device, the feature information generation system, the feature information generation method, and the feature information generation program of the present disclosure are described with reference to the drawings. The drawings showing a structure appropriately include an XYZ coordinate system in which the XYZ-axes are perpendicular to one another.

### <Feature information generation device/feature information generation method>

The feature information generation device of the present disclosure generates feature information (template) for coin recognition from an image of a coin. In the present disclosure, a coin is not limited to money and may be a token coin for gaming machines. The planar shape of a coin may be any shape such as a circular shape or a polygonal shape. In the present disclosure, recognition may be denomination determination of determining the type of a coin, authenticity determination of determining the authenticity of a coin, fitness determination of determining the fitness (damaged or not) of a coin, or determination including a plurality of these determinations.

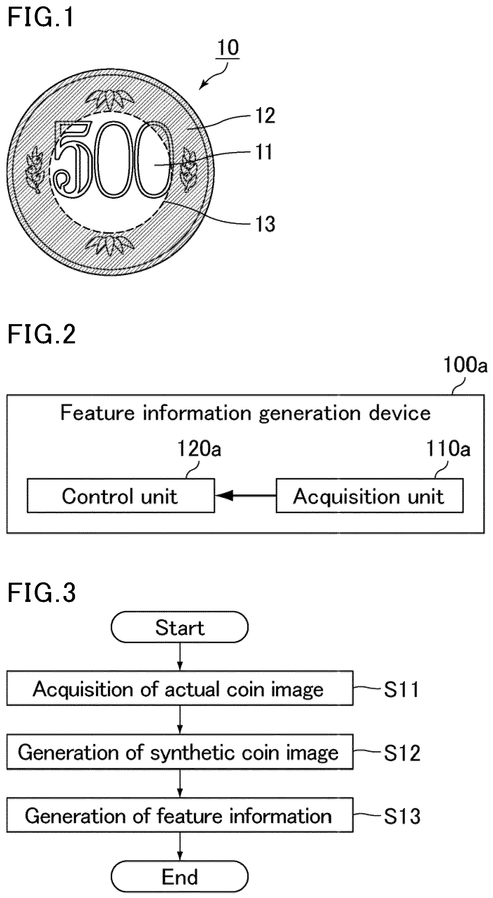

The feature information generation device of the present disclosure generates feature information used to recognize a coin including a first surface part formed from a first material and a second surface part formed from a second material different from the first material. Each of the first material and the second material is not limited to a metal (encompassing alloys) and may be a plastic. Hereinafter, a coin including the first surface part and the second surface part is also referred to as a "bicolor coin". The "bicolor coin" in the present disclosure may be any coin having regions formed from different materials on at least one of its front and back. For example, a bicolor coin may be one obtained by fitting a part formed from a first material with a part formed from a second material and thereby integrating the parts, or may be one whose main part formed from a first material is partially coated with a second material. Specific examples of the bicolor coin include, as shown in FIG. 1, a coin which includes a circular central part (core) 11 and an annular outer periphery part (ring) 12 surrounding the central part 11, wherein the central part 11 corresponds to the first surface part formed from the first material and the outer periphery part 12 corresponds to the second surface part formed from the second material. FIG. 1 shows a boundary line 13 in the boundary between the central part 11 and the outer periphery part 12 in a dotted line. In the case of a bicolor coin 10 shown in FIG. 1, the boundary line 13 has an annular shape. Yet, in the present disclosure, the shape of the boundary line 13 may be any shape such as a polygonal shape e.g., a hexagonal or octagonal shape, or an elliptical shape. The "bicolor coin" in the present disclosure is not limited to one whose colors of the first surface part and the second surface part are different from each other. The bicolor coin may be one whose colors of the first surface part and the second surface part are the same as each other.

FIG. 2 is a functional block diagram showing the structure of a feature information generation device of an embodiment. As shown in FIG. 2, a feature information generation device 100a of the embodiment includes an acquisition unit 110a and a control unit 120a.

The acquisition unit 110a acquires an actual coin image which is an image of an actual coin including a first surface part formed from a first material and a second surface part formed from a second material different from the first material. The acquisition unit 110a may be an input interface that imports an actual coin image acquired by an external image sensor unit into the feature information generation device 100a, or may be an image sensor unit provided in the feature information generation device 100a. The input interface may be of any type such as a connector, e.g., a USB terminal or a wired LAN terminal, or a communication device compatible with the wireless LAN standard or the Bluetooth^{®} standard, for example. The acquisition unit 110a may identify an actual coin image as a grayscale image and may output the grayscale image as a quadrilateral image in a predetermined size to the control unit 120a. The number of shades of gray in a grayscale image may be, but is not limited to, 256 shades.

The control unit 120a may be defined by, for example, programs for executing various processings, a central processing unit (CPU) that executes the programs, and various hardware devices controlled by the CPU. The CPU and the other hardware devices may be provided in the feature information generation device 100a.

The control unit 120a provides a virtual boundary line along the boundary between the first surface part and the second surface part in the actual coin image acquired from the acquisition unit 110a to generate a synthetic coin image. The boundary line 13 and the virtual boundary line are different in that the boundary line 13 is a physically present linear boundary (a real boundary line) on a bicolor coin 10 while the virtual boundary line is an image provided to a coin image and is a physically absent line (hypothetical boundary line).

The control unit 120a may execute the preprocessing for the actual coin image acquired from the acquisition unit 110a before generating a synthetic coin image, and may execute the above processing of generating a synthetic coin image for the actual coin image having undergone the preprocessing. Examples of the preprocessing include an image cut-out processing of cutting out only an image in a quadrilateral (e.g., square) region circumscribed about the actual coin image, an edge extraction processing using an edge detection operator, and polar coordinate conversion of converting an actual coin image to a polar coordinate image. Each of these processings may be executed alone or two or more of the processings may be executed in combination. These processings are described in more detail below.

The control unit 120a generates feature information for coin recognition based on the generated synthetic coin image. Specifically, the feature information may be based on the generated synthetic coin image as is without image processing or may be the feature extracted from the synthetic coin image. Also, only the portion to be used for coin recognition may be cut out from the whole synthetic coin image to generate feature information. For example, the peripheral portion with no pattern may be removed to generate feature information.

The operation of the feature information generation device of the present embodiment is described with reference to FIG. 3. FIG. 3 is a flowchart showing an example of the operation of the feature information generation device 100a.

As shown in FIG. 3, first, the acquisition unit 110a executes the processing of acquiring an actual coin image which is an image of an actual coin (step S11).

Next, the control unit 120a executes the processing of providing a virtual boundary line along the boundary between the first surface part and the second surface part in the actual coin image acquired in step S11 and thereby generating a synthetic coin image (step S12). Before step S12, the control unit 120a may execute the preprocessing for the actual coin image acquired in step S11.

The control unit 120a then executes the processing of generating feature information for coin recognition based on the synthetic coin image generated in step S12 (step S13), whereby the operation of the feature information generation device 100a ends.

In the feature information generation device of the present embodiment, the processings by the control unit 120a generate feature information (template) based on the synthetic coin image acquired by providing the virtual boundary line to the actual coin image. With the virtual boundary line, the influence of the boundary line 13 extending along the boundary between the first surface part and the second surface part and the vicinity of the boundary line 13 on the recognition can be reduced or prevented. Thus, the present embodiment enables creation of feature information (template) allowing appropriate coin recognition even when a soiled coin having surface parts formed from different materials as in a bicolor coin is unavailable.

Also, the virtual boundary line provided to the actual coin image by the control unit 120a may be a masked region not used in the coin recognition. With the virtual boundary line formed as a masked region, the influence of the boundary line 13 and the vicinity thereof on the recognition can be reduced or prevented by an assured and simple method. The masked region may be set on a portion other than the virtual boundary line, such as a portion of a coin where the year of issue is stamped. In other words, the virtual boundary line may be at least part of the masked region.

The control unit 120a may generate feature information based on one synthetic coin image or may generate feature information based on a plurality of synthetic coin images to which different virtual boundary lines are provided. Examples of a mode of generating feature information based on one synthetic coin image include a mode in which the intensity (pixel value indicating the brightness) of the virtual boundary line is made the same as the average intensity of the actual coin image.

When feature information is generated based on a plurality of synthetic coin images, the synthetic coin images may at least include a first synthetic coin image to which a first virtual boundary line is provided as the virtual boundary line and a second synthetic coin image to which a second virtual boundary line different from the first virtual boundary line is provided as the virtual boundary line. Based on a plurality of virtual boundary lines, a plurality of pseudo actual coin images with different levels of soiling on the boundary line 13 may be reproduced.

The first virtual boundary line and the second virtual boundary line may be combined in any manner. Examples thereof include a mode in which the first virtual boundary line and the second virtual boundary line are made different in intensity (pixel value indicating the brightness), a mode in which the first virtual boundary line and the second virtual boundary line are made different in thickness (width), and a mode in which the first virtual boundary line and the second virtual boundary line are made different in intensity and thickness. In the case where the range of variation in level of soiling (shading) on the boundary line 13 is supposed to be wide based on the structure of the boundary between the first surface part and the second surface part of an actual coin, a plurality of virtual boundary lines with different line intensities may be used to generate feature information (template). The virtual boundary line intensity may be set, for example, according to the assumed level of soiling (shading) on the boundary line 13 of the actual coin. Also, in the case where the range of variation in area of the soiled region on the boundary line 13 is supposed to be wide based on the structure of the boundary between the first surface part and the second surface part of an actual coin, a plurality of virtual boundary lines with different line thicknesses may be used to generate feature information (template). The virtual boundary line thickness may be set, for example, according to the area of the assumed soiled region on the boundary line 13 of the actual coin. The intensity and the thickness of the virtual boundary line may be constant or variable within one boundary line 13. For example, the intensity of the virtual boundary line may be gradually varied (gradation may be made) from the center of the line in the line width direction toward the outer periphery of the line, or the virtual boundary line may vary in width or may break at some point on the boundary line 13. The intensity and the thickness of the virtual boundary line may be set by any method. For example, each of the intensity and the thickness may be calculated from an image of a bicolor coin similar to the coin to be recognized but different in denomination from the coin to be recognized, or data on variation in the boundary line 13 may be created and used.

In order to provide information on the range of variation in the boundary line 13, various virtual boundary lines with different intensities and/or different thicknesses may be set and feature information (template) may be generated based on the synthetic coin images to which the various virtual boundary lines are provided. This may enable creation of a template that allows appropriate coin recognition even when the intensity and/or the thickness of the boundary line 13 varies. In other words, one template may be created which is robust against the variation in the boundary line 13 by creating a plurality of synthetic coin images and extracting the feature to be identified through the processings by the control unit 120a. Also, a pattern around the boundary line 13 may be used for recognition without being ignored. The method of creating a template based on a plurality of synthetic coin images is not limited. For example, a template may be created by machine learning with the synthetic coin images used as learning data.

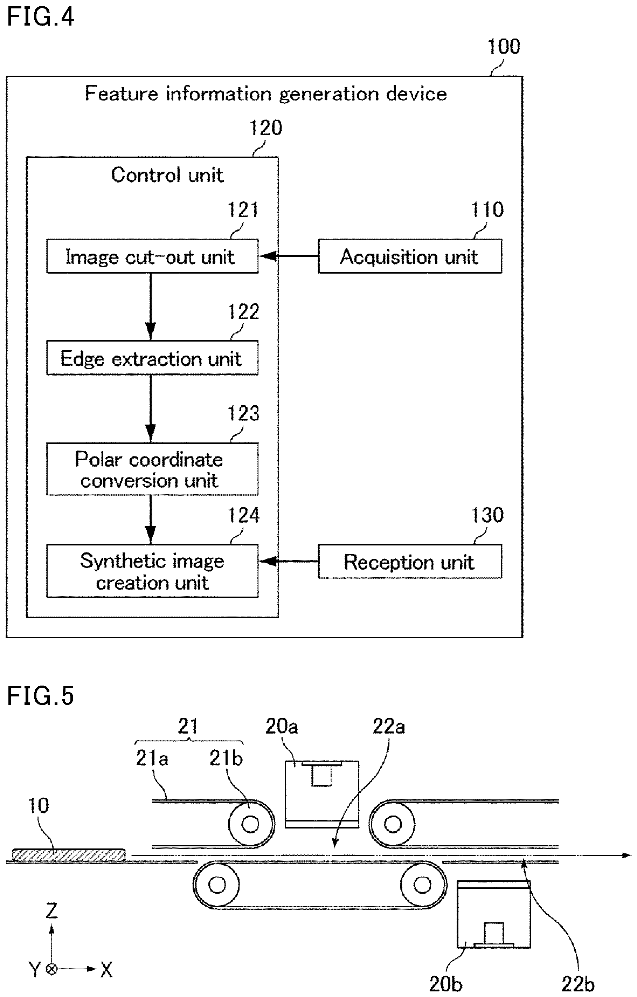

FIG. 4 is a functional block diagram showing the structure of a feature information generation device of another embodiment. As shown in FIG. 4, a feature information generation device 100 of this embodiment includes an acquisition unit 110, a control unit 120, and a reception unit 130. The control unit 120 is defined by an image cut-out unit 121, an edge extraction unit 122, a polar coordinate conversion unit 123, and a synthetic image creation unit 124.

The acquisition unit 110 acquires an actual coin image which is an image of an actual coin. The acquisition unit 110 may be an input interface that imports an actual coin image acquired by an external image sensor unit into the feature information generation device 100, or may be an image sensor unit provided in the feature information generation device 100. The input interface may be of any type such as a connector, e.g., a USB terminal or a wired LAN terminal, or a communication device compatible with the wireless LAN standard or the Bluetooth^{®} standard, for example. The acquisition unit 110a identifies an actual coin image as a grayscale image and outputs the grayscale image as a quadrilateral image in a predetermined size to the image cut-out unit 121. The number of shades of gray in a grayscale image may be, but is not limited to, 256 shades.

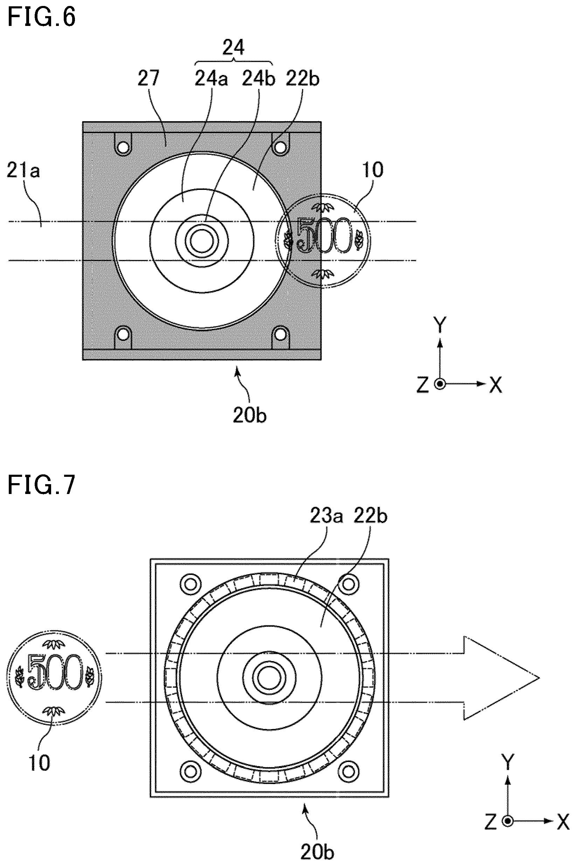

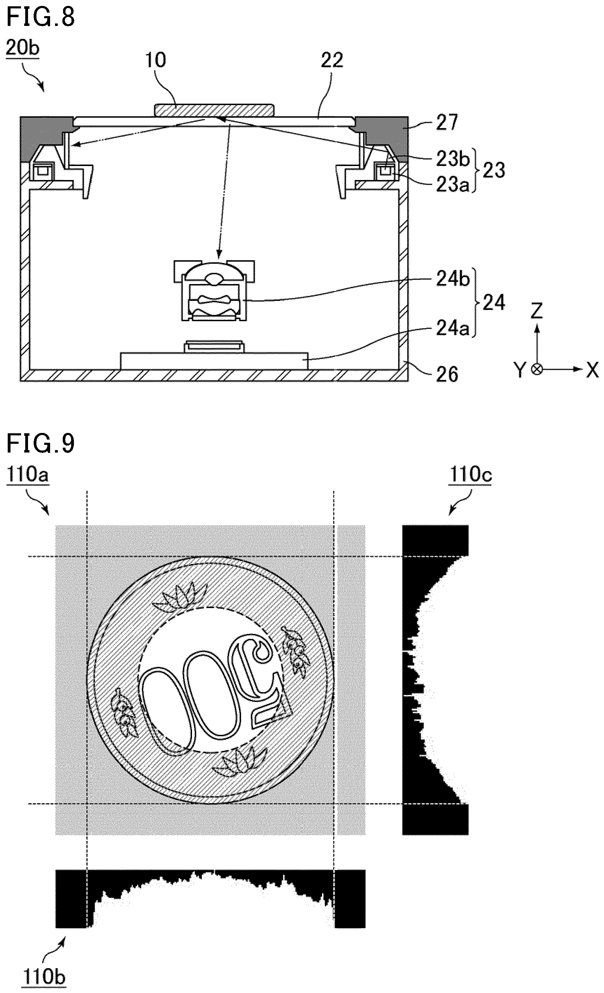

The following describes an image sensor unit with reference to FIGs. 5 to 8. FIG. 5 is a schematic side view of an example of an image sensor unit. FIG. 6 is a schematic plan view of a transport surface of the image sensor unit in FIG. 5. FIG. 7 is a view of the internal structure of the image sensor unit in FIG. 5 with the transport path side cover removed. FIG. 8 is a schematic cross-sectional view of the image sensor unit in FIG. 5. The arrows in FIGs. 5 and 7 indicate the transport direction of a bicolor coin 10 that is transported along a transport path from upstream to downstream (in the +X direction). In FIG. 8, the solid line arrow indicates the optical path of light applied to the bicolor coin 10, and the dashed and double-dotted lines indicate the optical paths of lights reflected by the bicolor coin 10.

As shown in FIG. 5, bicolor coins 10 are transported one by one with a space in between within an XY plane in the +X direction by transport units 21 each disposed above or below the transport path and each defined by a transport belt 21a and other components. The bicolor coins 10 pass through imaging areas 22a and 22b for paired image sensor units 20a and 20b disposed above and below (+Z direction and -Z direction of) the transport path, respectively. The transport belts 21a each are driven by a driving device including a pulley 21b and a motor, for example.

The image sensor unit 20a in the upstream of the transport path and the image sensor unit 20b in the downstream of the transport path have structures that are symmetric about the transport surface parallel to the XY plane. The paired image sensor units 20a and 20b capture images of the front and back of each bicolor coin 10. This enables acquisition of the actual coin images of both sides of the bicolor coin 10. When all the bicolor coins 10 are transported along the transport path with the same sides of the coins placed face down or up by a coin front/back setting mechanism or any other device, the image sensor unit 20a or 20b may be provided alone.

The image sensor units 20a and 20b each include a transparent portion 22 having a circular planar shape and disposed parallelly to the XY plane for the imaging area 22a or 22b, a lighting unit 23 that irradiates the imaging area 22a or 22b with light, and an imaging unit 24 that captures an image of the imaging area 22a or 22b. With this structure, each bicolor coin 10 passing through the imaging area 22a or 22b can be imaged under the light.

Specifically, the lighting unit 23 and the imaging unit 24 are disposed inside a box-shaped housing 26 with its transparent portion 22 side open, and a transport path side cover 27 is placed on the top (transport path side) of the housing 26. The transparent portion 22 is provided in the center of the transport path side cover 27. The transparent portion 22 may be made of a material excellent in strength and transparency, and may be made of sapphire glass.

The lighting unit 23 is an annular lighting that is provided in the upper portion inside the housing 26 and surrounds the imaging unit 24 (imaging area 22a or 22b) in a plan view. The lighting unit 23 includes a plurality of light-emitting elements 23a arranged in an annular pattern in the XY plane and an annular prism (light guide) 23b on the light-emitting elements 23a.

The lighting unit 23 may include a low angle light source that emits light at an irradiation angle relative to the coin surface (the upper surface of the transparent portion 22 (the surface facing the transport path)) of greater than 0 degrees and not greater than 45 degrees. As shown in FIG. 8, a component of light emitted from a low angle light source and specularly reflected by the coin surface is not incident on the imaging unit 24 while a component of the light diffusely reflected by the coin surface is incident on the imaging unit 24. Thus, a lighting with low angle light sources is advantageous in detection of an uneven pattern on the coin surface but is susceptible to the soiling on the boundary line 13.

The light-emitting elements 23a may each be a light emitting diode (LED). Light emitted from each light-emitting element 23a enters the prism 23b. The prism 23b has, as shown in FIG. 8, a bottom surface (light incidence surface) facing the emission surface of the light-emitting element 23a, a reflection surface that reflects light, incident on the bottom surface and travelling upward, toward the transparent portion 22, and a light exit surface facing the transparent portion 22. The lighting unit 23 may include a light diffusion film having a function of diffusing light between the light exit surface of the prism 23b and the transparent portion 22.

The imaging unit 24 includes a photoelectric conversion unit 24a where a CMOS image sensor, a CCD image sensor, or other components are arranged, and a lens unit 24b that receives light reflected by a bicolor coin 10 passing through the imaging area 22a or 22b and forms an image on the light receiving surface of the photoelectric conversion unit 24a. The imaging unit 24 may be oriented to the direction (+Z direction or -Z direction) perpendicular to the imaging area 22a or 22b.

The control unit 120 is defined by, for example, programs for executing various processings, a central processing unit (CPU) for executing the programs, and various hardware devices controlled by the CPU. The CPU and the other hardware devices are provided in the feature information generation device 100.

The control unit 120 utilizes the image cut-out unit 121, the edge extraction unit 122, and the polar coordinate conversion unit 123 to execute the preprocessing for generating a synthetic coin image from an actual coin image. Hereinafter, the details of the preprocessing are described with reference to FIGs. 9 to 12. The drawings are schematic views used to describe the details of the processing and do not strictly show the actual processing results.

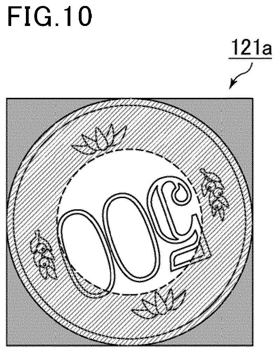

FIG. 9 is a view used to describe the outline of a processing executed by an image cut-out unit 121. The image cut-out unit 121 acquires an actual coin image 110a from the acquisition unit 110, cuts out only an image in the square region circumscribed about the actual coin image 110a, and outputs the acquired cut-out image 121a to the edge extraction unit 122. FIG. 10 is a view showing an example of a cut-out image 121a output by the image cut-out unit 121.

Specifically, the image cut-out unit 121 scans the actual coin image 110a acquired from the acquisition unit 110 in the horizontal direction to accumulate the intensities (pixel values) of all the pixels, and thus generates a horizontal histogram 110b. Also, the image cut-out unit 121 scans the actual coin image 110a in the vertical direction to generate a vertical histogram 110c by the same procedure. In addition, the image cut-out unit 121 scans each of the horizontal histogram 110b and the vertical histogram 110c to calculate the coordinates of the rising point and the falling point of the accumulated pixel values. The image cut-out unit 121 then cuts out the region surrounded by the calculated coordinates (in FIG. 9, the region surrounded by the grid-shaped dashed lines) as a cut-out image 121a, and outputs the cut-out image 121a to the edge extraction unit 122.

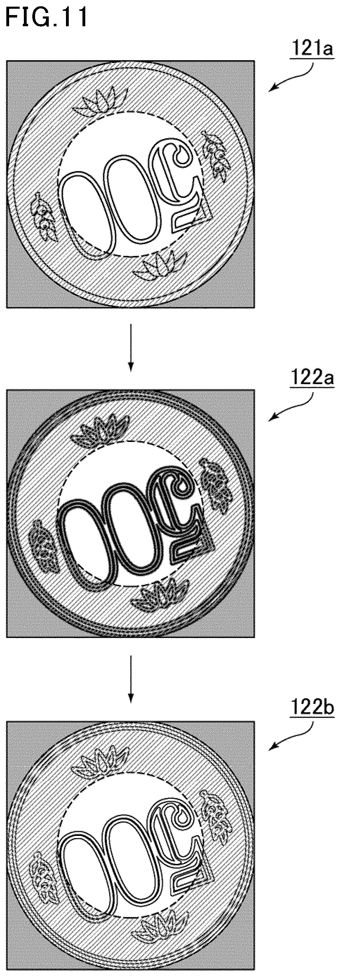

FIG. 11 is a view used to describe the outline of an edge extraction processing (image conversion processing) executed by the edge extraction unit 122. First, the edge extraction unit 122 executes the edge extraction processing using an edge detection operator for the cut-out image 121a acquired from the image cut-out unit 121 to calculate a change in intensity (edge intensity), thus creating an edge image 122a. The edge detection operator can be a Sobel operator, a Roberts operator, or a Prewitt operator, for example. Using the edge image 122a, influences based on the individual difference in parameters such as the lightness or hue of the cut-out image 121a can be avoided.

Next, the edge extraction unit 122 normalizes the edge image (edge intensity) 122a to create a normalized edge image 122b, and outputs the normalized edge image 122b to the polar coordinate conversion unit 123. Each pixel value of the normalized edge image 122b is, for example, a grayscale value from 0 to 255, with 0 corresponding to black (background portion) and 255 corresponding to white (edge portion). Normalization of the edge intensity reduces or eliminates the possibility that the edge intensity calculation results vary between the cases where the actual coin is a new coin whose edge is easy to extract and where the actual coin is a circulated coin whose edge is difficult to extract. The normalization therefore enables generation of an edge image less affected by the oldness of the coin.

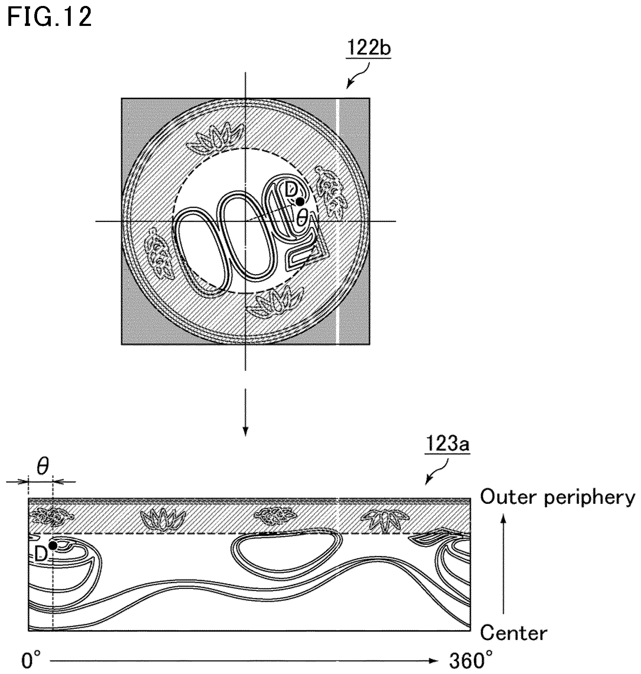

FIG. 12 is a view used to describe the outline of polar coordinate conversion executed by the polar coordinate conversion unit 123. The polar coordinate conversion unit 123 executes polar coordinate conversion for the normalized edge image 122b acquired from the edge extraction unit 122. Specifically, first, the polar coordinate conversion unit 123 calculates the central point of the normalized edge image 122b and sets the central point as the origin of the polar coordinates. The polar coordinate conversion unit 123 then identifies each pixel based on the angle of rotation θ and the distance D from the central point, transfers each pixel to the D-θ space to create a polar coordinate image 123a, and outputs the polar coordinate image 123a to the synthetic image creation unit 124.

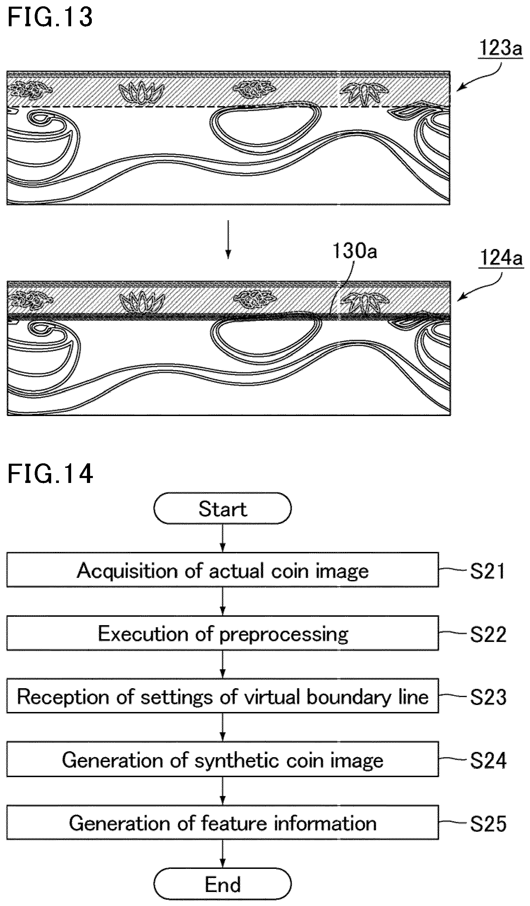

FIG. 13 is a view used to describe the details of a processing executed by the synthetic image creation unit 124. The synthetic image creation unit 124 provides a virtual boundary line 130a to the polar coordinate image 123a (actual coin image having undergone the polar coordinate conversion) acquired in the preprocessing along the boundary between the first surface part and the second surface part to generate a synthetic coin image 124a. In the present embodiment, the virtual boundary line 130a is provided based on the settings of the virtual boundary line 130a received by the reception unit 130. The boundary line 13 and the virtual boundary line 130a are different in that the boundary line 13 is a physically present linear boundary (a real boundary line) on a bicolor coin 10 while the virtual boundary line 130a is an image provided to a coin image and is a physically absent line (hypothetical boundary line).

In the present disclosure, the preprocessing may or may not be executed and the details of the preprocessing are not limited. A preprocessing suited for the type of the feature information (template) for coin recognition may be executed as appropriate. In other words, in the present disclosure, the "actual coin image" to which a virtual boundary line 130a is to be provided when the control unit 120 generates a synthetic coin image 124a may be the actual coin image 110a itself acquired by the acquisition unit or may be an actual coin image for which the preprocessing (image conversion processing) has been performed, such as the polar coordinate image 123a.

The reception unit 130 receives the settings of the virtual boundary line 130a to be provided to the synthetic coin image 124a. The reception unit 130 may be, for example, an input device such as a mouse, a keyboard, or a touchscreen and receives the settings of the virtual boundary line 130a input by the user. Examples of the settings of the virtual boundary line 130a include the setting parameters such as the position, intensity, and thickness of the virtual boundary line 130a. The setting parameters may be those read, according to the denomination selected through the input device, from the preset information in the storage device or those directly input or selected through the input device.

The setting parameters may be determined without the reception unit 130 by determining the denomination based on the actual coin image and reading the preset information in the storage device according to the determined denomination. Also, the position of the virtual boundary line 130a may be set based on the detection result of detecting the position of the boundary line 13 from an actual coin image. The width of the virtual boundary line 130a may be any width with which the virtual boundary line 130a at least overlaps the boundary (boundary line 13) between the first surface part and the second surface part of an actual coin image. The virtual boundary line 130a may be made wider than the boundary line 13 by including the vicinity of the boundary line 13.

The control unit 120 generates feature information for coin recognition based on the synthetic coin image 124a. Specifically, the feature information may be based on the synthetic coin image 124a created by the synthetic image creation unit 124 as is without image processing or may be the feature extracted from the synthetic coin image 124a. Also, only the portion to be used for coin recognition may be cut out from the whole synthetic coin image 124a to generate feature information. For example, the peripheral portion with no pattern may be removed to generate feature information.

Here, the operation of the feature information generation device of the present embodiment is described with reference to FIG. 14. FIG. 14 is a flowchart showing an example of the operation of the feature information generation device 100.

As shown in FIG. 14, first, the acquisition unit 110 executes the processing of acquiring an actual coin image 110a which is an image of an actual coin (step S21).

Next, the control unit 120 (image cut-out unit 121, edge extraction unit 122, and polar coordinate conversion unit 123) executes the preprocessing (image cut-out processing, edge extraction processing, and polar coordinate conversion processing) for the actual coin image 110a acquired in step S21 (step S22). Step S22 may be omitted.

Then, the reception unit 130 receives the settings of the virtual boundary line 130a (step S23). The timing to execute step S23 may be scheduled for any time before the subsequent step S24, and may be, for example, before step S21 or between step S21 and step S22. Step S23 may be omitted.

Next, the control unit 120 (synthetic image creation unit 124) executes the processing of providing a virtual boundary line 130a to the polar coordinate image 123a acquired in step S22 (which may be the actual coin image 110a acquired in step S21) along the boundary between the first surface part and the second surface part and thereby generating a synthetic coin image 124a (step S24).

The control unit 120 then executes the processing of generating feature information for coin recognition based on the synthetic coin image 124a generated in step S24 (step S25), whereby the operation of the feature information generation device 100 ends.

In the feature information generation device of the present embodiment, the processings by the control unit 120 generate feature information (template) based on the synthetic coin image 124a acquired by providing the virtual boundary line 130a to the actual coin image. With the virtual boundary line 130a, the influence of the boundary line 13 extending along the boundary between the first surface part and the second surface part and the vicinity of the boundary line 13 on the recognition can be reduced or prevented. Thus, the present embodiment enables creation of feature information (template) allowing appropriate coin recognition even when a soiled coin having surface parts formed from different materials as in a bicolor coin is unavailable.

Also, the process of providing the virtual boundary line 130a to the actual coin image based on the settings of the virtual boundary line 130a received by the reception unit 130 facilitates the processing of setting the virtual boundary line 130a.

Also, the virtual boundary line 130a may be a masked region not used in the coin recognition. With the virtual boundary line 130a formed as a masked region, the influence of the boundary line 13 and the vicinity thereof on the recognition can be reduced or prevented by an assured and simple method. The masked region may be set on a portion other than the virtual boundary line 130a, such as a portion of a coin where the year of issue is stamped. In other words, the virtual boundary line 130a may be at least part of the masked region.

The control unit 120 may generate feature information based on one synthetic coin image 124a or may generate feature information based on a plurality of synthetic coin images 124a to which different virtual boundary lines 130a are provided. Examples of a mode of generating feature information based on one synthetic coin image 124a include a mode in which the intensity (pixel value indicating the brightness) of the virtual boundary line 130a is made the same as the average intensity of the actual coin image. For example, in the image verifying method disclosed in JP 4563741 B which compares an actual coin to be recognized with feature information (template), a template is used to generate a template image based on pixels having a positive intensity (positive template) and a template image based on pixels having a negative intensity (negative template) with the average intensity of the actual coin image as a threshold. These positive and negative templates are used for comparison with an image showing the correlation between the actual coin to be recognized and the feature information. In such a process, when the intensity of the virtual boundary line 130a is set the same as the average intensity of the actual coin image, the virtual boundary line 130a serves as a masked region not used in coin recognition. This can prevent the portion to which the virtual boundary line 130a has been provided from influencing the verification result. Thus, the influence of the boundary line 13 and the vicinity thereof on the recognition can be reduced or prevented.

When feature information is generated based on a plurality of synthetic coin images 124a, synthetic coin images 124a may at least include a first synthetic coin image to which a first virtual boundary line is provided as the virtual boundary line 130a and a second synthetic coin image to which a second virtual boundary line different from the first virtual boundary line is provided as the virtual boundary line 130a. Based on a plurality of virtual boundary lines 130a, a plurality of pseudo actual coin images with different levels of soiling on the boundary line 13 can be reproduced. Thus, the influence of the boundary line 13 and the vicinity thereof on the recognition can be reduced or prevented.

The first virtual boundary line and the second virtual boundary line may be combined in any manner. Examples thereof include a mode in which the first virtual boundary line and the second virtual boundary line are made different in intensity (pixel value indicating the brightness), a mode in which the first virtual boundary line and the second virtual boundary line are made different in thickness (width), and a mode in which the first virtual boundary line and the second virtual boundary line are made different in intensity and thickness. In the case where the range of variation in level of soiling (shading) on the boundary line 13 is supposed to be wide based on the structure of the boundary between the first surface part and the second surface part of an actual coin, a method is effective in which a plurality of virtual boundary lines 130a with different line intensities is used to generate feature information (template). The intensity of the virtual boundary line 130a may be set, for example, according to the level of soiling (shading) on the boundary line 13 of the actual coin. Also, in the case where the range of variation in area of the soiled region on the boundary line 13 is supposed to be wide based on the structure of the boundary between the first surface part and the second surface part of an actual coin, a method is effective in which a plurality of virtual boundary lines 130a with different line thicknesses is used to generate feature information (template). The thickness of the virtual boundary line 130a can be set, for example, according to the area of the assumed soiled region on the boundary line 13 of the actual coin. The intensity and the thickness of the virtual boundary line 130a may be constant or variable within one boundary line 13. For example, the intensity of the virtual boundary line 130a may be gradually varied (gradation may be made) from the center of the line in the line width direction toward the outer periphery of the line, or the virtual boundary line 130a may vary in width or may break at some point on the boundary line 13. The intensity and the thickness of the virtual boundary line 130a may be set by any method. For example, each of the intensity and the thickness may be calculated from an image of a bicolor coin similar to the coin to be recognized but different in denomination from the coin to be recognized, or data on variation in the boundary line 13 may be created and used.

In order to provide information on the range of variation in the boundary line 13, various virtual boundary lines 130a with different intensities and/or different thicknesses may be set and feature information (template) may be generated based on the synthetic coin images 124a to which the various virtual boundary lines 130a are provided. This enables creation of a template that allows appropriate coin recognition even when the intensity and/or the thickness of the boundary line 13 varies. In other words, one template may be created which is robust against the variation in the boundary line 13 by creating a plurality of synthetic coin images 124a and extracting the feature to be identified through the processings by the control unit 120. Also, a pattern around the boundary line 13 may be used for recognition without being ignored. The method of creating a template based on a plurality of synthetic coin images 124a is not limited. For example, a template may be created by machine learning with the synthetic coin images 124a used as learning data.

In the present disclosure, the actual coin image used to generate a synthetic coin image **(e.g.,** synthetic coin image 124a) may be an image of a new actual coin. When only new coins with no soiling on the boundary line 13 are available as actual coins as in immediately after issuance of a new series of coins, a method of providing a virtual boundary line **(e.g.,** virtual boundary line 130a) to reduce or prevent the influence of the boundary line 13 is particularly effective. Meanwhile, the actual coin image used to generate a synthetic coin image **(e.g.,** synthetic coin image 124a) may be an image of a circulated actual coin. The boundary line 13 of some coins is clearer upon issuance as a new series of coins while the boundary line 13 of some coins becomes clearer as they are circulated, depending on the types of coins. Thus, when only a circulated coin with no boundary line 13 is available, generation of a template may be demanded to which the virtual boundary line **(e.g.,** virtual boundary line 130a) is provided to reduce or prevent the influence of the boundary line 13.

The feature information generation device of the present disclosure may be a special device for generating feature information (template) or a general-purpose computer in which a program for generating feature information is installed. One mode of the feature information generation device of the present disclosure may be a device that is located in a facility of a manufacturer of a coin recognition device and is independent of a coin handling device located in a market.

### <Coin recognition device>

In the case where the coin recognition device is to acquire a coin image acquired by the coin handling device located in a market or feature information thereof through a communication means so as to recognize a coin, the feature information generation device of the present disclosure may be a part of a coin recognition device. Such a cloud server-type coin recognition device can execute consistently from generation of feature information (template) to coin recognition.

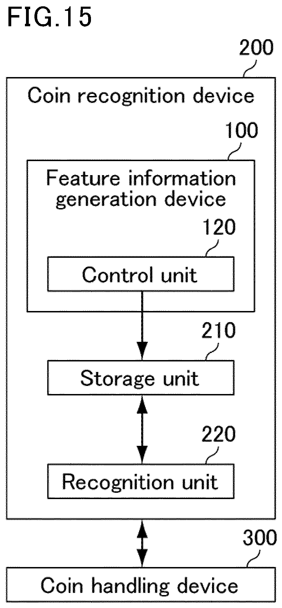

FIG. 15 is a functional block diagram showing the structure of a cloud server-type coin recognition device of an embodiment. A cloud server-type coin recognition device 200 of the embodiment includes the feature information generation device 100, a storage unit 210, and a recognition unit 220. The cloud server-type coin recognition device 200 receives a coin image acquired by a coin handling device 300 located in a market or feature information thereof through a communication means. Then, the recognition unit 220 compares feature information (template) created by the feature information generation device 100 and stored in the storage unit 210 in advance with the acquired coin image or feature information thereof. The recognition result output from the recognition unit 220 is transmitted to the coin handling device 300 through a communication means.

The storage unit 210 stores feature information generated by the control unit 120 of the feature information generation device 100. The hardware devices defining the storage unit 210 include, but are not limited to, a storage medium such as a flash memory, a DRAM, and an HDD.

The recognition unit 220 recognizes a coin to be recognized based on the feature that can be acquired from an image of the coin to be recognized (hereinafter, such a feature is also referred to as a "detection feature") and the feature information (template) stored in the storage unit 210.

The recognition unit 220 may recognize a coin by any method such as a known image verifying method. For example, as described above, when feature information to which the virtual boundary line 130a having the same intensity as the average intensity of an actual coin image is used, a template is used to generate a positive template (corresponding to an image of a region with the edge) and a negative template (corresponding to an image of a region with no edge) with the intensity of the virtual boundary line 130a as a threshold, and these positive and negative templates are used for comparison with an image showing the correlation between the actual coin to be recognized and the feature information, as in the image verifying method disclosed in JP 4563741 B comparing an image of the actual coin to be verified and the template. As a result of comparison, the following four types of images are generated: (A+) an image in which the edge is detected at proper positions; (A-) an image in which the edge is not detected at proper positions; (B+) an image in which the edge is detected at improper positions; and (B-) an image in which the edge is not detected at improper positions. The pixel values of these four types of images are substituted into a conditional expression to calculate the verification values, whereby the recognition result is obtained.

Also, the recognition unit 220 may recognize a coin by a method of comparing the edge feature in the detection feature with the edge feature in the template. The edge feature can be, for example, extracted using a filter for extracting the directionality of the line.

Furthermore, the details of the recognition by the recognition unit 220 may be, but are not limited to, any of denomination determination, authenticity determination, fitness determination, and a combination of any of these determinations.

The cloud server-type coin recognition device 200 may include the feature information generation device 100a instead of the feature information generation device 100. The storage unit 210 may store feature information generated by the control unit 120a of the feature information generation device 100a. The recognition unit 220 may compare the feature information (template) created by the feature information generation device 100a and stored in the storage unit 210 in advance with the acquired coin image or feature information thereof.

The coin recognition device described above recognizes a coin based on the feature information (template) generated by the feature information generation device of the present disclosure, i.e., the template in which a masked region not used in coin recognition is set along the boundary line 13. Meanwhile, the influence of the boundary line 13 and the vicinity thereof on recognition can also be reduced or prevented by setting a masked region in an image of the coin to be recognized instead of a template. As described above, in the present disclosure, a masked region is set along the boundary line 13 in either an image of the coin to be recognized or feature information (template) for reference. One mode of the coin recognition device of the present disclosure therefore includes an acquisition unit that acquires a coin image for recognition which is an image of a coin to be recognized, the coin to be recognized including a first surface part formed from a first material and a second surface part formed from a second material different from the first material; a storage unit that stores reference feature information generated from an image of a reference coin of the same type as the coin to be recognized; and a recognition unit that extracts feature information of the coin to be recognized from the coin image for recognition and recognizes the coin to be recognized based on the feature information of the coin to be recognized and the reference feature information, the feature information of the coin to be recognized or the reference feature information including a masked region that is formed along a boundary between the first surface part and the second surface part and is not used in coin recognition.

The above mode sets a masked region on the boundary between the first surface part and the second surface part in the feature information of the coin to be recognized or the reference feature information (template), thus reducing or preventing the influence of the boundary between the first surface part and the second surface part by an assured and simple method. Such a mode enables appropriate coin recognition even when a soiled coin having surface parts formed from different materials as in a bimetal coin is unavailable.

### <Feature information generation system>

A feature information generation system in which the functions of the feature information generation device 100 of the embodiment above are assigned to different devices is also one mode of the present disclosure. Specifically, the system may have a structure in which the acquisition unit 110 and the control unit 120 are installed in different devices and connected to each other through a communication means. For example, the acquisition unit 110 may be a coin handling device located in a market while the control unit 120 may be a special device for generating feature information (template).

When the acquisition unit 110 is a coin handling device located in a market, an actual coin image acquired by the coin handling device can be used to update the feature information (template).

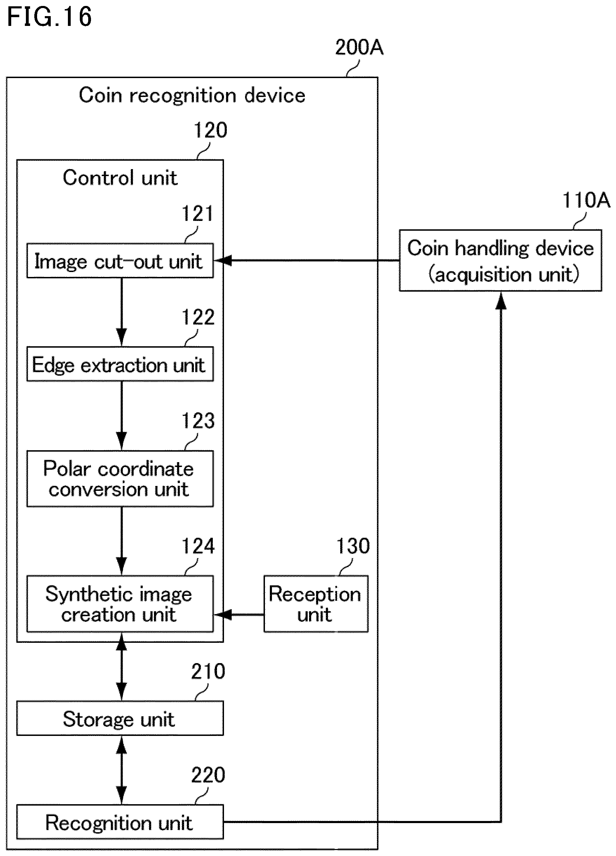

FIG. 16 is a functional block diagram showing the structure of a feature information generation system of an embodiment. The feature information generation system of the embodiment includes a cloud server-type coin recognition device 200A and a coin handling device 110A that functions as the acquisition unit 110 of the feature information generation device 100. The coin recognition device 200A includes the control unit 120, the reception unit 130, the storage unit 210, and the recognition unit 220. The control unit 120 is defined by the image cut-out unit 121, the edge extraction unit 122, the polar coordinate conversion unit 123, and the synthetic image creation unit 124. The coin recognition device 200A receives a coin image acquired by the coin handling device 110A located in a market or feature information thereof through a communication means. The recognition unit 220 compares the feature information (template) stored in the storage unit 210 with the acquired coin image or feature information thereof. The recognition result output by the recognition unit 220 is transmitted to the coin handling device 110A through a communication means. The template may be created based on a coin image acquired by the coin handling device 110A or feature information thereof and the settings of the virtual boundary line 130a received by the reception unit 130 and may be updated using a new coin image acquired by the coin handling device 110A.

The feature information generation system of the present embodiment may be one in which the functions of the feature information generation device 100a, instead of the feature information generation device 100, are assigned to different devices. In other words, the system may have a structure in which the acquisition unit 110a and the control unit 120a are installed in different devices and connected to each other through a communication means. For example, the acquisition unit 110a may be a coin handling device located in a market while the control unit 120a may be a special device for generating feature information (template).

When the acquisition unit 110a is a coin handling device located in a market, an actual coin image acquired by the coin handling device can be used to update the feature information (template).

As in the case shown in FIG. 16, the cloud server-type coin recognition device including the control unit 120a may be used so that the coin recognition device receives a coin image acquired by the coin handling device (acquisition unit 110a) located in a market or feature information thereof through a communication means, the recognition unit of the coin recognition device compares the feature information (template) stored in the storage unit of the coin recognition device with the acquired coin image or feature information thereof, and the recognition result output by the recognition unit is transmitted to the coin handling device through a communication means. The template may be created based on a coin image acquired by the coin handing device (acquisition unit 110a) or feature information thereof and may be updated using a new coin image acquired by the coin handling device.

### <Feature information generation method and feature information generation program>

A feature information generation method including the image acquisition step executed by the acquisition unit 110a and the feature information generation step executed by the control unit 120a in the embodiment above is also one mode of the present disclosure. A feature information generation program causing the feature information generation device to execute the image acquisition processing executed by the acquisition unit 110a and the feature information generation processing executed by the control unit 120a in the embodiment above is also one mode of the present disclosure. In addition, a feature information generation method including the image acquisition step executed by the acquisition unit 110 and the feature information generation step executed by the control unit 120 in the embodiment above is one mode of the present disclosure. The feature information generation method of this mode may further include the reception step executed by the reception unit 130 in the embodiment above and the feature information generation step may include providing a virtual boundary line to the actual coin image based on the settings of the virtual boundary line received in the reception step. Also, a feature information generation program causing the feature information generation device to execute the image acquisition processing executed by the acquisition unit 110 and the feature information generation processing executed by the control unit 120 in the embodiment above is one mode of the present disclosure. The feature information generation program of this mode may further cause the feature information generation device to execute the reception processing executed by the reception unit 130 in the embodiment above, and the feature information generation processing may include providing a virtual boundary line to the actual coin image based on the settings of the virtual boundary line received in the reception processing. Also, the structures described in the embodiments above may appropriately be combined with these feature information generation methods and feature information generation programs. Each feature information generation program may be preinstalled in the feature information generation device, may be stored in a computer-readable storage medium to be available to the operator (user), or may be provided to the operator (user) through a network.

The feature information generation device, the feature information generation system, the feature information generation method, and the feature information generation program of the present disclosure generate feature information for bicolor coin recognition. Yet, they may distinguish bicolor coins from coins other than the bicolor coins to provide a virtual boundary line to the bicolor coins while not providing a virtual boundary line to the coins other than the bicolor coins.

The embodiments of the present disclosure were described with reference to the drawings. The present disclosure is not limited to the embodiments. The structures of the embodiments may be combined or modified as appropriate within the spirit of the present disclosure.

The embodiments above describe the cases of generating feature information used to recognize a bicolor coin including a first surface part formed from a first material and a second surface part formed from a second material different from the first material. Yet, the technique of generating feature information is applicable to a coin in which two or more parts formed from the first material are fit and integrated. For example, the above technique of generating feature information may be used in the case of generating feature information to be used to recognize a coin including a central part (core) formed from the first material and an outer periphery part (ring) formed from the first material.

### INDUSTRIAL APPLICABILITY

As described above, the feature information generation device, the feature information generation system, the feature information generation method, and the feature information generation program of the present disclosure are useful techniques in coin recognition since they can generate feature information for appropriate recognition of a coin corresponding to a soiled coin even when the actual soiled coin is unavailable. Also, the coin recognition device of the present disclosure is a technique useful in coin recognition since the device can appropriately recognize a coin corresponding to a soiled coin using feature information even when the actual soiled coin is unavailable.

## Claims

1. A feature information generation device (100) that generates feature information for coin recognition from an image of a coin,
the feature information generation device (100) comprising:
an acquisition unit (110a) configured to acquire an actual coin image which is an image of an actual coin, the actual coin including a first surface part corresponding to a core of the actual coin and formed from a first material and a second surface part corresponding to a ring surrounding the core and formed from a second material different from the first material; and
a control unit (120a) configured to generate a synthetic coin image (124a) to which a virtual boundary line (130a) is provided along a boundary between the first surface part and the second surface part in the actual coin image, the virtual boundary line having a width including the boundary, and to generate the feature information based on the synthetic coin image (124a).

2. The feature information generation device (100) according to claim 1, further comprising:
a reception unit (130) configured to receive a setting of the virtual boundary line (130a),
wherein the control unit (120a) is configured to provide the virtual boundary line (130a) to the actual coin image based on the setting of the virtual boundary line (130a) received by the reception unit (130).

3. The feature information generation device (100) according to claim 1 or 2,
wherein the virtual boundary line (130a) comprises a masked region not used in coin recognition.

4. The feature information generation device (100) according to any one of claims 1 to 3,
wherein an intensity of the virtual boundary line (130a) is the same as an average intensity of the actual coin image.

5. The feature information generation device according to any one of claims 1 to 3,
wherein the synthetic coin image at least includes a first synthetic coin image to which a first virtual boundary line is provided as the virtual boundary line (130a) and a second synthetic coin image to which a second virtual boundary line different from the first virtual boundary line is provided as the virtual boundary line (130a).

6. The feature information generation device (100) according to claim 5,
wherein the first virtual boundary line and the second virtual boundary line are different in line intensity.

7. The feature information generation device (100) according to claim 5 or 6,
wherein the first virtual boundary line and the second virtual boundary line are different in line thickness.

8. The feature information generation device (100) according to any one of claims 1 to 7,
wherein the actual coin is a new coin.

9. A coin recognition device comprising:
the feature information generation device (100) according to any one of claims 1 to 8;
a storage unit configured to store the feature information generated by the control unit (120a) of the feature information generation device; and
a recognition unit (220) configured to recognize a coin to be recognized based on a feature acquirable from an image of the coin to be recognized and the feature information stored in the storage unit (210).

10. A feature information generation method that generates feature information for coin recognition from an image of a coin,
the feature information generation method comprising:
an image acquisition step of acquiring an actual coin image which is an image of an actual coin, the actual coin including a first surface part corresponding to a core of the actual coin and formed from a first material and a second surface part corresponding to a ring surrounding the core and formed from a second material different from the first material; and
a feature information generation step of generating a synthetic coin image (124a) to which a virtual boundary line (130a) is provided along a boundary between the first surface part and the second surface part in the actual coin image, the virtual boundary line having a width including the boundary, and generating the feature information based on the synthetic coin image (124a).

## Patentansprüche

1. Vorrichtung zur Erzeugung von Merkmalsinformationen (100), die Merkmalsinformationen für die Münzerkennung aus einem Bild einer Münze erzeugt,
die Vorrichtung zur Erzeugung von Merkmalsinformationen (100) umfassend:
eine Erfassungseinheit (110a), die so konfiguriert ist, dass sie ein tatsächliches Münzbild erfasst, das ein Bild einer tatsächlichen Münze ist, wobei die tatsächliche Münze einen ersten Oberflächenbereich, der einem Kern der tatsächlichen Münze entspricht und aus einem ersten Material gebildet ist, und einen zweiten Oberflächenbereich, der einem den Kern umgebenden Ring entspricht und aus einem zweiten Material gebildet ist, das sich vom ersten Material unterscheidet, einschließt; und
eine Steuereinheit (120a), die so konfiguriert ist, dass sie ein synthetisches Münzbild (124a) erzeugt, dem eine virtuelle Begrenzungslinie (130a) entlang einer Grenze zwischen dem ersten Oberflächenteil und dem zweiten Oberflächenteil im tatsächlichen Münzbild zugeführt wird, wobei die virtuelle Begrenzungslinie eine Breite einschließt, die die Grenze einschließt, und dass sie die Merkmalsinformationen basierend auf dem synthetischen Münzbild (124a) erzeugt.

2. Vorrichtung zum Erzeugen von Merkmalsinformationen (100) nach Anspruch 1, ferner umfassend:
eine Empfangseinheit (130), die zum Empfangen einer Einstellung der virtuellen Begrenzungslinie (130a) konfiguriert ist,
wobei die Steuereinheit (120a) so konfiguriert ist, dass sie die virtuelle Begrenzungslinie (130a) für das tatsächliche Münzbild basierend auf der von der Empfangseinheit (130) empfangenen Einstellung der virtuellen Begrenzungslinie (130a) bereitstellt.

3. Vorrichtung zur Erzeugung von Merkmalsinformationen (100) nach Anspruch 1 oder 2,
wobei die virtuelle Begrenzungslinie (130a) einen maskierten Bereich umfasst, der bei der Münzerkennung nicht verwendet wird.

4. Vorrichtung zur Erzeugung von Merkmalsinformationen (100) nach einem der Ansprüche 1 bis 3,
wobei die Intensität der virtuellen Begrenzungslinie (130a) der durchschnittlichen Intensität des tatsächlichen Münzbildes entspricht.

5. Vorrichtung zur Erzeugung von Merkmalsinformationen nach einem der Ansprüche 1 bis 3,
wobei das synthetische Münzbild mindestens ein erstes synthetisches Münzbild, dem eine erste virtuelle Begrenzungslinie als virtuelle Begrenzungslinie (130a) zugewiesen ist, und ein zweites synthetisches Münzbild, dem eine zweite virtuelle Begrenzungslinie, die sich von der ersten virtuellen Begrenzungslinie unterscheidet, als virtuelle Begrenzungslinie (130a) zugewiesen ist, einschließt.

6. Vorrichtung zur Erzeugung von Merkmalsinformationen (100) nach Anspruch 5,
wobei sich die erste virtuelle Begrenzungslinie und die zweite virtuelle Begrenzungslinie in ihrer Linienintensität unterscheiden.

7. Vorrichtung zur Erzeugung von Merkmalsinformationen (100) nach Anspruch 5 oder 6,
wobei sich die erste virtuelle Begrenzungslinie und die zweite virtuelle Begrenzungslinie in ihrer Linienstärke unterscheiden.

8. Vorrichtung zur Erzeugung von Merkmalsinformationen (100) nach einem der Ansprüche 1 bis 7,
wobei die tatsächliche Münze eine neue Münze ist.

9. Münzerkennungsvorrichtung, umfassend:
die Vorrichtung zur Erzeugung von Merkmalsinformationen (100) nach einem der Ansprüche 1 bis 8,
eine Speichereinheit, die zum Speichern der von der Steuereinheit (120a) der Vorrichtung zur Erzeugung von Merkmalsinformationen erzeugten Merkmalsinformationen konfiguriert ist; und
eine Erkennungseinheit (220), die so konfiguriert ist, dass sie basierend auf einem Merkmal eine zu erkennende Münze erkennt, das aus einem Bild der zu erkennenden Münze gewonnen werden kann, und basierend auf den in der Speichereinheit (210) gespeicherten Merkmalsinformationen.

10. Verfahren zur Erzeugung von Merkmalsinformationen, das Merkmalsinformationen für die Münzerkennung aus einem Bild einer Münze erzeugt,
das Verfahren zur Erzeugung von Merkmalsinformationen umfassend:
einen Bilderfassungsschritt zum Erfassen eines tatsächlichen Münzbildes, das ein Bild einer tatsächlichen Münze ist, wobei die tatsächliche Münze einen ersten Oberflächenbereich, der einem Kern der tatsächlichen Münze entspricht und aus einem ersten Material gebildet ist, und einen zweiten Oberflächenbereich, der einem den Kern umgebenden Ring entspricht und aus einem zweiten Material gebildet ist, das sich vom ersten Material unterscheidet, einschließt; und
einen Schritt zum Erzeugen von Merkmalsinformationen, bei dem ein synthetisches Münzbild (124a) erzeugt wird, dem eine virtuelle Begrenzungslinie (130a) entlang einer Grenze zwischen dem ersten Oberflächenteil und dem zweiten Oberflächenteil im tatsächlichen Münzbild zugeführt wird, wobei die virtuelle Begrenzungslinie eine Breite einschließt, die die Grenze einschließt, und dass sie die Merkmalsinformationen basierend auf dem synthetischen Münzbild (124a) erzeugt.

## Revendications

1. Dispositif de génération d'informations de caractéristique (100) qui génère des informations de caractéristique pour la reconnaissance de pièce de monnaie à partir d'une image d'une pièce de monnaie,
le dispositif de génération d'informations de caractéristique (100) comprenant :
une unité d'acquisition (110a) configurée pour acquérir une image de pièce de monnaie réelle qui est une image d'une pièce de monnaie réelle, la pièce de monnaie réelle comportant une première partie de surface correspondant à un noyau de la pièce de monnaie réelle et formée d'un premier matériau, et une seconde partie de surface correspondant à un anneau entourant le noyau et formée d'un second matériau différent du premier matériau ; et
une unité de commande (120a) configurée pour générer une image de pièce de monnaie synthétique (124a) à laquelle une ligne de frontière virtuelle (130a) est fournie le long d'une frontière entre la première partie de surface et la seconde partie de surface dans l'image de pièce de monnaie réelle, la ligne de frontière virtuelle ayant une largeur comportant la frontière, et pour générer les informations de caractéristique sur la base de l'image de pièce de monnaie synthétique (124a).

2. Dispositif de génération d'informations de caractéristique (100) selon la revendication 1, comprenant en outre :
une unité de réception (130) configurée pour recevoir un réglage de la ligne de frontière virtuelle (130a),
dans lequel l'unité de commande (120a) est configurée pour fournir la ligne de frontière virtuelle (130a) à l'image de pièce de monnaie réelle sur la base du réglage de la ligne de frontière virtuelle (130a) reçue par l'unité de réception (130).

3. Dispositif de génération d'informations de caractéristique (100) selon la revendication 1 ou 2,
dans lequel la ligne de frontière virtuelle (130a) comprend une région masquée non utilisée dans la reconnaissance de pièce de monnaie.

4. Dispositif de génération d'informations de caractéristique (100) selon l'une quelconque des revendications 1 à 3,
dans lequel une intensité de la ligne de frontière virtuelle (130a) est la même qu'une intensité moyenne de l'image de pièce de monnaie réelle.

5. Dispositif de génération d'informations de caractéristique selon l'une quelconque des revendications 1 à 3,
dans lequel l'image de pièce de monnaie synthétique comporte au moins une première image de pièce de monnaie synthétique à laquelle une première ligne de frontière virtuelle est fournie comme ligne de frontière virtuelle (130a) et une seconde image de pièce de monnaie synthétique à laquelle une seconde ligne de frontière virtuelle différente de la première ligne de frontière virtuelle est fournie comme ligne de frontière virtuelle (130a).

6. Dispositif de génération d'informations de caractéristique (100) selon la revendication 5,
dans lequel la première ligne de frontière virtuelle et la seconde ligne de frontière virtuelle ont une intensité de ligne différente.

7. Dispositif de génération d'informations de caractéristique (100) selon la revendication 5 ou 6,
dans lequel la première ligne de frontière virtuelle et la seconde ligne de frontière virtuelle ont une épaisseur de ligne différente.

8. Dispositif de génération d'informations de caractéristique (100) selon l'une quelconque des revendications 1 à 7,
dans lequel la pièce de monnaie réelle est une pièce de monnaie neuve.

9. Dispositif de reconnaissance de pièce de monnaie comprenant : le dispositif de génération d'informations de caractéristique (100) selon l'une quelconque des revendications 1 à 8 ;
une unité de stockage configurée pour stocker les informations de caractéristique générées par l'unité de commande (120a) du dispositif de génération d'informations de caractéristique ; et
une unité de reconnaissance (220) configurée pour reconnaître une pièce de monnaie à reconnaître sur la base d'une caractéristique pouvant être acquise à partir d'une image de la pièce de monnaie à reconnaître et des informations de caractéristique stockées dans l'unité de stockage (210).

10. Procédé de génération d'informations de caractéristique qui génère des informations de caractéristique pour la reconnaissance de pièce de monnaie à partir d'une image d'une pièce de monnaie,
le procédé de génération d'informations de caractéristique comprenant :
une étape d'acquisition d'image destinée à acquérir une image de pièce de monnaie réelle qui est une image d'une pièce de monnaie réelle, la pièce de monnaie réelle comportant une première partie de surface correspondant à un noyau de la pièce de monnaie réelle et formée d'un premier matériau, et une seconde partie de surface correspondant à un anneau entourant le noyau et formée d'un second matériau différent du premier matériau ; et
une étape de génération d'informations de caractéristique destinée à générer une image de pièce de monnaie synthétique (124a) à laquelle une ligne de frontière virtuelle (130a) est fournie le long d'une frontière entre la première partie de surface et la seconde partie de surface dans l'image de pièce de monnaie réelle, la ligne de frontière virtuelle ayant une largeur comportant la frontière, et à générer les informations de caractéristique sur la base de l'image de pièce de monnaie synthétique (124a).
